# EUROPEAN PATENT SPECIFICATION

(11) **EP 1 070 862 B1**
(45) Date of publication and mention of the grant of the patent: **23.07.2003**
(21) Application number: 00104598.8
(22) Date of filing: 15.03.2000
(51) Int. Cl.: F16B 45/02

(54) **Wide base perpendicular hook karabiner**
Senkrechter Karabinerhaken mit breiter Unterstützungsfläche
Mousqueton perpendiculaire avec une embase de support large

(30) Priority: 21.07.1999 IT TO990649
(43) Date of publication of application: 24.01.2001
(73) Proprietor: Aludesign S.r.l., 24034 Cisano Bergamasco (BG) (IT)
(72) Inventor: Maruelli, Stefano, 10016 Montalto Dora (TO) (IT)
(74) Representative: Marietti, Giuseppe

(56) References cited:
- FR-A- 331 831
- FR-E- 2 734
- US-A- 4 835 823
- US-A- 5 913 479

## Description

The present invention relates to auxiliary equipment used for personal safety and, in particular, for sports climbing.

More specifically, the invention relates to a quick-locking safety karabiner comprising a shaped body having an arcuate striker portion which defines a hollow conformation by which the karabiner can be attached to an elongated support element such as a rope or a loop element, the hollow attachment conformation being accessible via an opening in the body adjacent the arcuate part and in correspondence to which there is disposed a closing element which can oscillate in the general plane of the arcuate portion between a position intercepting the opening in which it engages with the arcuate portion and an open position in which it is spaced from the arcuate portion.

Karabiners of the type defined above known at present have the main drawback of being substantially flat, so that, when they are connected by means of a rope or a tape to a fixture on a wall, e.g. ringed piton, they lie parallel to the wall because of their shape and the force of gravity. Another characteristic of the karabiner known at present is that the force generated by the spring which regulates the opening of the mobile part lies in a plane without constrains so that a climber who wants to insert his safety rope into one of these karabiners must use one hand to hold the karabiner away from the wall and hold it immobile until the rope is inserted into it by means of the other hand which must in some way press the rope onto the mobile part in order to rotate it to free the access for the rope. When it is not practically possible to operate with two hands, then one hand with great difficulty must attempt to straighten the karabiner, holding it steady with some of the fingers while using the rest of the fingers (which are holding the rope) to press the rope onto the mobile part in order to insert the rope. The operation is difficult and laborious in most cases and is often dangerous, since it is carried out when the climber is far from the previous anchor point and in the event of a fall would travel a distance equal to twice the length of the rope from the present position back to the preceding karabiner.

FR-A-331.831 and FR-E-2.734 disclose a karabiner comprising a shaped body having an arcuate striker portion defining a hook extremity for the attachment of an elongated support element - such as a rope - in which the shaped body has an opening adjacent the arcuate portion corresponding to which is disposed a closing element. The closing element can oscillate in the general plane defined by the arcuate portion between one position of intercepting the opening, in which it engages with the arcuate portion, and an open position, in which it is spaced from the said portion. The shaped body defines a base of support, substantially flat and transverse to the general plane of the arcuate portion. The said base of support lies entirely onto a single plane, thus providing a "surface to surface" bearing of the karabiner on external surfaces.

In order to avoid such drawbacks, the object of the present invention is a karabiner of the type described above, in which the body defines a base that, in turn, defines unambiguously at least one plane of support transversal to the general plane of the arcuate portion, so that in normal use the karabiner lies naturally with the arcuate portion perpendicular to the surface on which it lies.

The object of the present invention is therefore a karabiner of the type disclosed in FR-A-331.831 or in FR-E-2.734, as described in the preamble of claim 1, characterised in that, when the karabiner lies with its base of support on a surface, said base of support rests on said surface by means of three or more points of support, so that the arcuate portion extends perpendicularly to such a surface.

Due to this idea for a solution, the karabiner automatically lies in such a way the force of the spring regulating the mobile part is opposed by the reaction of the surface of support. The rope may thus be inserted into its hollow conformation of attachment by one hand alone - i.e. by the hand that controls the rope - simply by pressing the rope onto the mobile part. The said part, being attached by a hinge whose constraining reactions are balanced by the surface of support on which it lies, must move in the only degree of freedom left to it and frees enough space for the rope to enter the karabiner. This operation can be done quickly and in relative safety.

Preferably, the closing element has a vertex part which can engage a hook extremity of the arcuate part and presents a tapered form, decreasing in width from its hinged base to its vertex.

In this way, the possibility of the closing element accidentally opening and spacing itself from engagement with the arcuate portion is removed, preventing the rope from disengaging from the karabiner in the case of a rope which is engaged in the attachment formation of the karabiner and may pass from one side of the karabiner to the other.

Further characteristics and advantages of the invention will be obvious from the detailed description which follows, which is by way of example and not limiting, in which reference is made to the attached drawings in which:

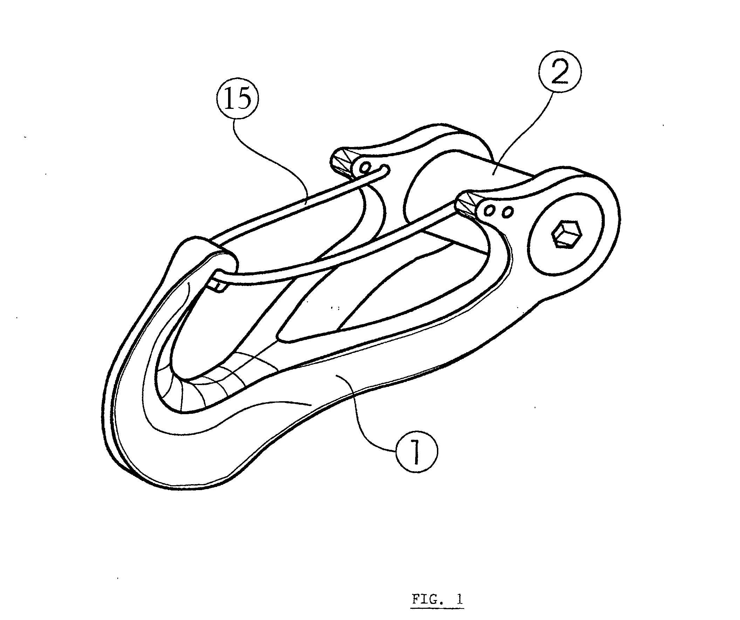

- Figure 1 is a prospective view of a karabiner according to the invention.

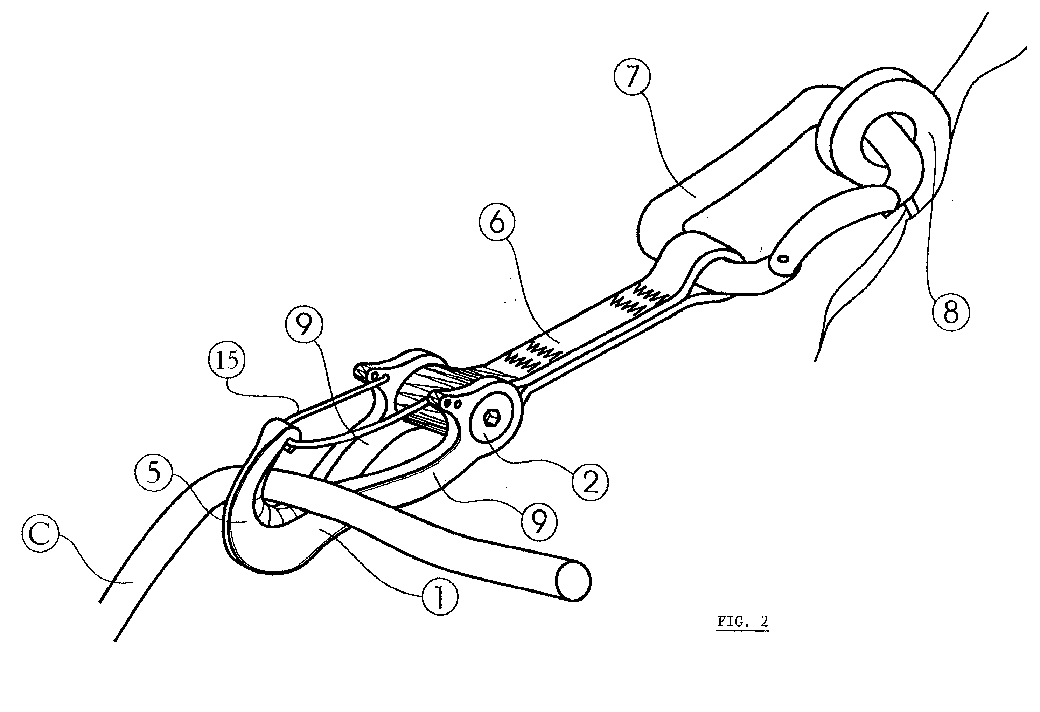

- Figure 2 is a prospective view of the karabiner of fig.1 connected to a restraint element and with a rope engaged in the attachment conformation.
- Figure 3 and 4 are schematic prospective views which illustrate in sequence the respective stages of the engagement of a rope in the karabiner, produced according to the present invention, in Figs 1 and 2 .

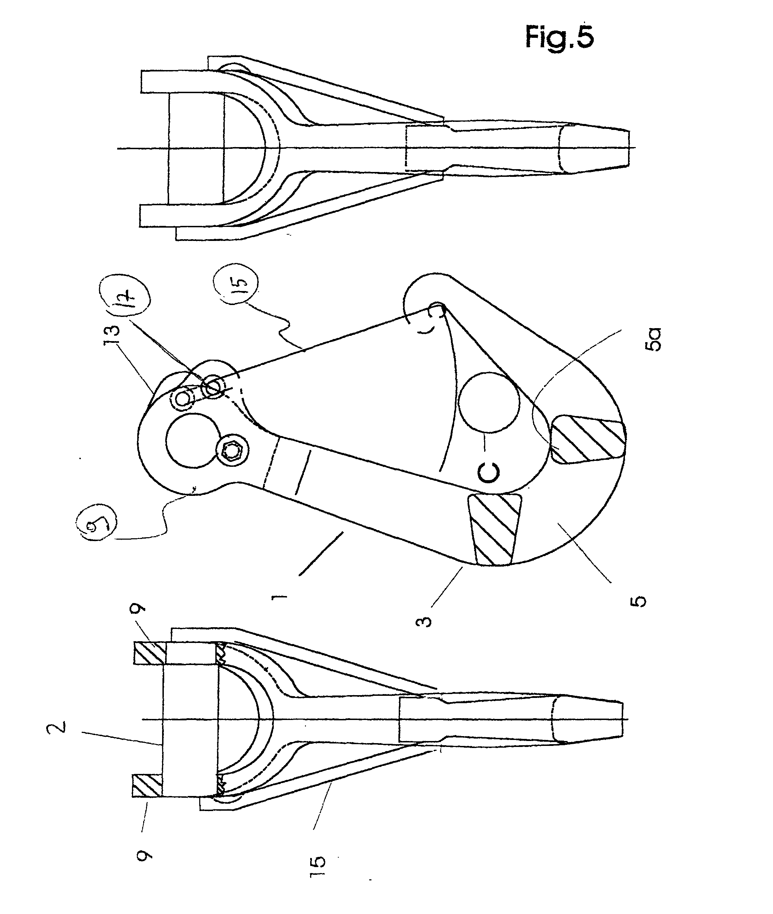

- Figure 5 shows three prospective views of a karabiner according to the present invention.

With reference to the figures, a safety karabiner according to the invention which can be used in particular in climbing, is indicated in general by reference number 1. It comprises a shaped body 3 preferably produced from a single piece of light alloy, preferably high-strength aluminum such as Ergal or Avional, having an arcuate striker portion 5 which surrounds at least part of a hollow attachment conformation 5a. This attachment conformation 5a is shaped as a saddle to receive an elongated support element such as a rope C or loop element of the user e.g. a climber.

From the arcuate portion 5 there extends a forked portion which includes a pair of arms 9 arranged substantially in a U-shape. The arms 9 comprise corresponding circular seats in the extremities opposite the arcuate portion 5. The function of these seats will be made clear below.

The arms 9 define a plane substantially perpendicular to the plane in which the arcuate portion 5 lies, and so define a support plane for the karabiner 1, e.g. on the surface of a rockface. In particular, the support base of the karabiner 1 is transverse to the general plane in which the arcuate portion 5 lies, so in the position where the karabiner 1 lies stable with its base on a surface, the arcuate portion 5 extends perpendicular to that surface.

From each of the extremities of the arms 9 there extends a relative appendage 13 turned to the same part as the arcuate portion 5, for the articulation of a closing element 15, which closes one opening of the karabiner adjacent to the arcuate portion 5 in such a way as to permit the rope C to reach the saddle-backed conformation 5a and is so shaped as to minimize the friction due to chafing of the rope C in particular conditions of use.

The element 15 is fitted in order to oscillate in the general plane of the arcuate portion 5 between a first position in which it intercepts the opening of the karabiner 1 and where a vertex part of the element 15 engages a hook portion of the arcuate portion 5, and an open position in which the vertex part is spaced from the hook element. In particular, the element 15 presents a generally tapered shape, which could be produced by metal wire e.g. steel piano wire, shaped to a V- or U-shape. The two arms of the element 15 separate slightly from the vertex part to finish up approximately perpendicular to holes 17. At the extremity of the arms of the element 15 opposite the vertex part thereof there extend relative transverse projections each of which can engage a respective hole 17 formed in correspondence to each of the appendages 13. Such projections are riveted during assembly to prevent their escape from the respective holes 17.

When the length of rope C disposed above the karabiner 1 is moved from one side to the other with respect to the karabiner itself, the rope C tends to bear against and bend around the element 15. In traditional karabiners the closing part consists of an element substantially parallel to the plane of opening; in such circumstances the rope wound about it tends to open the karabiner and facilitate the escape of the rope from the karabiner. Since the element 15 in the karabiner 1 presents a shape tapered toward its vertex, in similar circumstances the rope C which tends to wind around the closing element is forced to slide along the tapered shape to fall into the saddle-backed conformation 5a; there is a natural tendency for the rope to return to the saddle-backed conformation 5a without imposing such force on the closing element 15 as to cause it to open. The closing element 15 remains therefore in its closed configuration and guarantees reliable operation of the karabiner 1.

Preferably in'a possible solution of application, the closing element 15 is slightly asymmetrical in that the arms are of different lengths in such a way as that one of the transverse projections engages one of the holes 17, while the other engages the other of the holes 17, the holes 17 being parallel but staggered so that there is an elastic force returning the closing element 15 to its position of intercepting the opening of the karabiner 1. In another possible solution of application the closing element 15 is wound around the pin 2 and engages the holes 17 symmetrically.

The circular seats of the extremities of the arms 9 are each surrounded by their respective collars and are engaged by the transverse pin 2 which is of a corresponding shape. The pin 2 acts as the anchor for connecting the karabiner 1 with a retaining element 6, e.g. consisting of a flexible tape or ribbon with hooks at opposite extremities, one of which surrounds the pin 2 while the other is engaged in an auxiliary karabiner M, e.g. of conventional structure, inserted into a ring piton inserted into a rockface.

The pin 2 is produced from a solid or hollow cylinder and is connected in a stable way to the arms 9 either by having screw-threads and action seats or by having seats with different diameters and one or two external lock screws.

Preferably, each collar is sufficiently broad radially so that, when the pin 2 is surrounded by the retaining element 6, there is space between the outside surface of the element 6 and the outer peripheral surface of the collar itself. In this way, when the karabiner 1 is resting on a surface, the element 6 is raised with regard to the surface (i.e. not in contact with the surface) and so avoids the kind of chafing that might damage it.

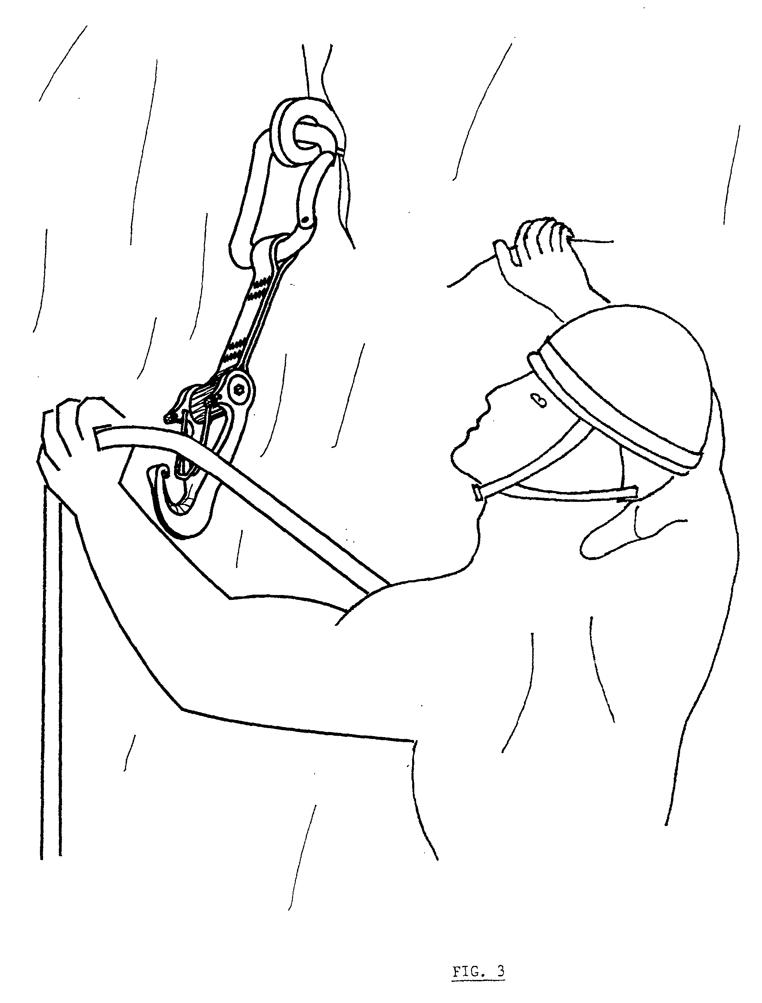

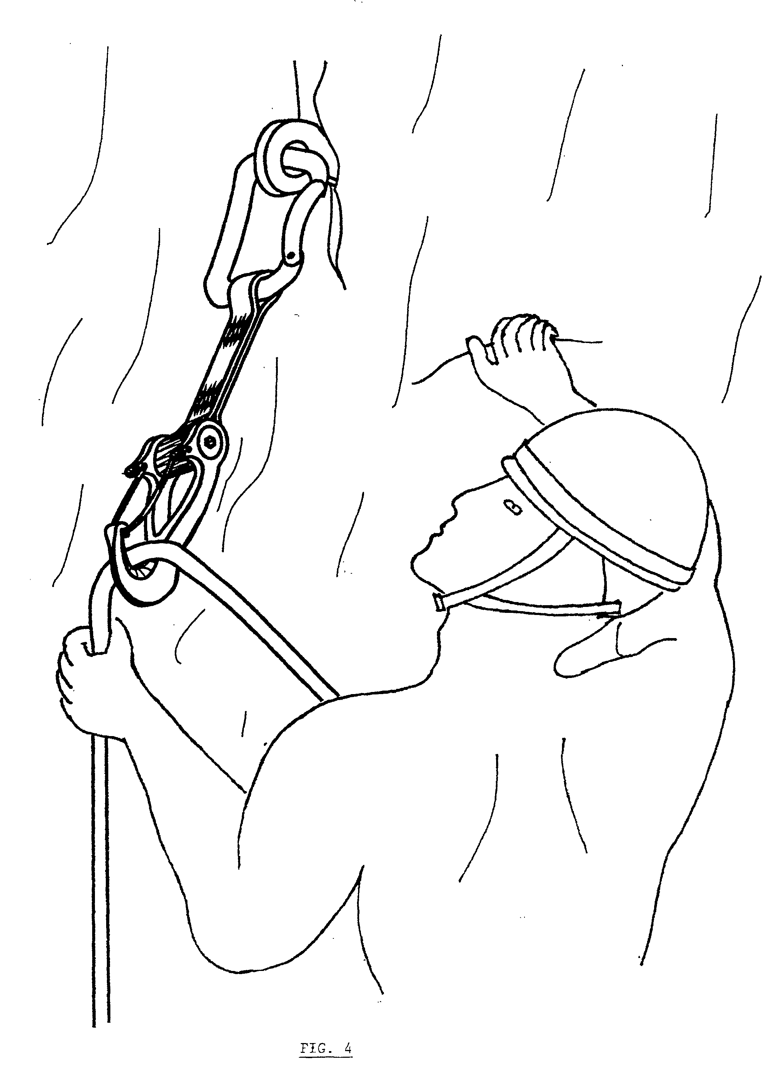

Figs 3 and 4 show a climber who is carrying out the operation of hooking the line C to the karabiner 1. The operation of hooking the rope C can be carried out alone by the hand which holds the rope C and without intervening directly with the opening of the karabiner 1, since the arcuate portion 5 of the karabiner 1 is always disposed perpendicularly to the surface of the rockface due to the support base of at least three points defined by the arcuate portion 5 and the forked portion.

Furthermore, the climber can insert the rope C into the karabiner from left to right or from right to left, or whatever side he pleases without worrying about avoiding certain passes of the rope C from one side or the other of the karabiner 1.

Naturally, the safety karabiner illustrated has been described for use in a rock climbing context, but it can be used for various other uses, e.g. for workers working on site, or in any situation where the characteristics of the invention afford an advantage.

## Claims

1. Quick-locking safety karabiner comprising a shaped body (3) having an arcuate striker portion (5) defining a hook extremity for the attachment of an elongated support element such as a rope (C) or a loop element, the body (3) having an opening adjacent the arcuate portion (5) corresponding to which is disposed a closing element (15) which can oscillate in the general plane of the arcuate portion (5) between one position of intercepting the opening, in which it engages with the arcuate portion (5), and an open position, in which it is spaced from the said portion (5), wherein the body (3) defines a stable base of support, substantially flat and transverse to the general plane of the arcuate portion (5), **characterised in that**, when the karabiner (1) lies with its base of support on a surface, said base of support rests on said surface by means of three or more points of support, so that the arcuate portion (5) extends perpendicularly to such a surface.

2. Karabiner according to Claim 1, **characterized in that** the body (3) comprises a forked portion opposite the arcuate portion (5) and having a pair of diverging arms (9) onto which is articulated the closing element (15), the arcuate portion (5) and the forked portion defining said three or more points of support.

3. Karabiner according to Claim 2, **characterized in that** the body (3) is made by plastic deformation of a light alloy, high-strength aluminium, in particular such as Ergal® or Avional®, or high-strength steel, by successive workings to produce the hook extremity perpendicular to the forked portion.

4. Karabiner according to Claim 2 or 3, **characterized in that** the dosing element (15) is provided with a vertex part to engage with said hook extremity of the arcuate portion (5) and that the closing element (15) is generally tapered from its portion of articulation to the vertex part.

5. Karabiner according to Claim 4, **characterized in that** the closing element (15) is realized by a means of a substantially V- or U-shaped steel wire, whose arms present respective transverse projections corresponding to the portion of articulation, to engage in corresponding holes (17) made in appendages (13) which extend from the free extremities of said diverging arms (9).

6. Karabiner according to Claim 5, **characterized in that** said holes (17) lying on different arms of the forked portion (7) have parallel but staggered axes.

7. Karabiner according to any of Claims 2 to 6, **characterized in that** said karabiner includes a transverse pin (2) suited to link with a elongated support element (6), such as a rope or a loop element surrounding the pin, said pin (2) engaging in a pair of corresponding circular seats each realized in a respective arm (9) near its free extremity opposite the arcuate portion (5) and said pin (2) lying in planes approximately parallel to said arcuate portion (5).

8. Karabiner according to Claim 7, **characterized in that** the pin (2) is disposed such a way that said elongated support element (6) which surrounds said pin (2), it is raised with regard to said base of support with the object of avoiding chafing on the retaining element (6) by a surface on which the karabiner (1) rests on the said base.

9. Karabiner according to Claim 7 or 8, **characterized in that** said pin (2) is an approximately cylindrical element that it is produced similarly to the body (3), in light alloy of high-strength aluminium, in particular such as Ergal® or Avional®, or in high strength steel, and that it is able to be locked into the seats by screw-threads or elements of fixture.

10. Karabiner according to Claims 7 to 9, **characterized in that** the pin (2) is realized by rolling or turning a semi-finished bar e.g. a drawn bar.

## Patentansprüche

1. Schnellverschluß-Sicherheitskarabiner, umfassend einen geformten Grundkörper (3) zum Befestigen eines länglichen Halteelements, wie z.B. einem Seil oder einem Schlaufenelement, wobei der Grundkörper (3) eine Öffnung nächst dem bogenförmigen Abschnitt (5) aufweist, passend zu welchem ein Verschlußelement (15) angeordnet ist, das in der allgemeinen Ebene des bogenförmigen Abschnitts (5) zwischen einer Halteposition, in der es mit dem bogenförmigen Abschnitt (5) zusammenwirkt, und einer offenen Position, in der es von dem genannten Abschnitt (5) beabstandet ist, hin- und herschwenken kann, wobei der Grundkörper (3) eine stabile Auflagebasis definiert, die im wesentlichen flach ist und quer zur allgemeinen Ebene des bogenförmigen Abschnitts (5) liegt, **dadurch gekennzeichnet, dass** der Karabiner (1) mit seiner Auflagebasis auf einer Oberfläche liegt, wobei die genannte Auflagebasis mittels drei oder mehr Auflagepunkten auf der genannten Fläche ruht, so daß der bogenförmige Abschnitt (5) sich senkrecht zu einer solchen Fläche erstreckt.

2. Karabiner nach Anspruch 1, **dadurch gekennzeichnet, dass** der Grundkörper (3) einen gabelförmigen Abschnitt umfaßt, der dem bogenförmigen Abschnitt (5) gegenüberliegt, und dass der Karabiner zwei ein Paar bildende auseinanderlaufende Schenkel (9) aufweist, an denen das Verschlußelement (15), der bogenförmige Abschnitt (5) und der gabelförmige Abschnitt gelenkig befestigt sind, und die die drei oder mehr genannten Auflagepunkte bilden.

3. Karabiner nach Anspruch 2, **dadurch gekennzeichnet, dass** der genannte Grundkörper (3) durch plastisches Umformen einer leichten Aluminiumlegierung mit hoher Festigkeit, insbesondere z.B. aus Ergal® oder Avional®, oder einem hochfesten Stahl hergestellt ist, indem aufeinanderfolgende Bearbeitungen durchgeführt werden, um das Hakenende senkrecht zu dem gabelförmigen Abschnitt herzustellen.

4. Karabiner nach Anspruch 2 oder 3, **dadurch gekennzeichnet, dass** das Verschlußelement (15) mit einem Scheitelabschnitt versehen ist, um mit dem genannten Hakenende des bogenförmigen Abschnitts (5) zusammenzuwirken und dass sich das Verschlußelement (15) im allgemeinen von seinem gelenkig befestigten Abschnitt zum Scheitelabschnitt hin verjüngt.

5. Karabiner nach Anspruch 4, **dadurch gekennzeichnet, dass** das Verschlußelement (15) durch Mittel realisiert ist, die aus einem im wesentlichen V- oder U-förmigen Stahldraht bestehen, dessen Schenkel jeweilige Quervorsprünge aufweisen, die mit dem Gelenkverbindungspunkt korrespondieren, um in korrespondierende Löcher (17) einzugreifen, die in Vorsprüngen (13) vorgesehen sind, die sich von den freien Enden der genannten auseinanderlaufenden Schenkel (9) erstrecken.

6. Karabiner nach Anspruch 5, **dadurch gekennzeichnet, dass** die genannten Löcher (17), die in verschiedenen Schenkeln des gabelförmigen Abschnitts liegen, parallele, jedoch versetzte Achsen haben.

7. Karabiner nach einem der Ansprüche 2 bis 6, **dadurch gekennzeichnet, dass** der genannte Karabiner einen Querbolzen (2) einschließt, der geeignet ist, mit einem länglichen Halteelement (6), wie z.B. einem Seil oder einem Schlaufenelement verbunden zu werden, welches den Bolzen umgibt, wobei der Bolzen (2) in ein Paar von korrespondierenden kreisförmigen Aufnahmen eingreift, die jeweils in einem entsprechenden Schenkel (9) nahe dem freien Ende gegenüber dem bogenförmigen Abschnitt (5) vorgesehen sind, und wobei der genannte Bolzen (2) in Ebenen liegt, die annähernd parallel zu dem genannten bogenförmigen Abschnitt (5) sind.

8. Karabiner nach Anspruch 7, **dadurch gekennzeichnet, dass** der Bolzen (2) derart angeordnet ist, dass das genannte längliche Halteelement (6), das den Bolzen (2) umgibt, gegenüber der Auflagebasis mit dem Ziel angehoben wird, zu verhindern, dass eine Fläche, auf der der Karabiner (1) mit seiner Auflagebasis ruht, an dem Halteelement (6) entlangscheuert.

9. Karabiner nach Anspruch 7 oder 8, **dadurch gekennzeichnet, dass** der genannte Bolzen (2) ein annähernd zylindrisches Element ist, das auf ähnliche Art wie der Grundkörper (3) aus einer leichten Aluminiumlegierung mit hoher Festigkeit, insbesondere z.B. aus Ergal® odel Avional®, oder einem hochfesten Stahl hergestellt ist, und dass er in den Aufnahmen durch Schraubgewinde oder Befestigungselemente verankert werden kann.

10. Karabiner nach den Ansprüche 7 bis 9, **dadurch gekennzeichnet, dass** der Bolzen (2) durch Walzen oder Drehen einer vorgefertigten Stange, z.B. einer gezogenen Stange, hergestellt ist.

## Revendications

1. Mousqueton de sécurité à fermeture rapide comprenant un corps profilé (3) qui comporte une partie de passage courbe (5) définissant une extrémité en crochet pour l'attache d'un élément de support allongé tel qu'une corde (C) ou un élément de boucle, le corps (3) ayant une ouverture adjacente à la partie courbe (5) et en correspondance de laquelle est disposé un élément de fermeture (15) qui peut osciller dans le plan général de la partie courbe (5) entre une position de blocage de l'ouverture, dans laquelle il est en prise avec la partie courbe (5), et une position ouverte dans laquelle il est espacé de ladite partie (5), dans lequel le corps (3) définit une base stable de support, substantiellement plate et transversale au plan général de la partie courbe (5), **caractérisé en ce que**, lorsque le mousqueton (1) repose par sa base de support sur une surface, ladite base de support repose sur ladite surface en trois points de support ou plus, de sorte que la partie courbe (5) s'étend perpendiculairement à cette surface.

2. Mousqueton selon la revendication 1, **caractérisé en ce que** le corps (3) comprend une partie fourchue située à l'opposé de la partie courbe (5) et ayant une paire de bras divergents sur lesquels est articulé l'élément de fermeture (15), la partie courbe (5) et la partie fourchue définissant lesdits trois points de support ou plus.

3. Mousqueton selon la revendication 2, **caractérisé en ce que** le corps (3) est fabriqué par déformation plastique d'un alliage léger, d'aluminium à haute résistance, en particulier Ergal® ou Avional®, ou d'acier à haute résistance, par formages successifs de manière à produire l'extrémité en crochet perpendiculaire à la partie fourchue.

4. Mousqueton selon la revendication 2 ou 3, **caractérisé en ce que** l'élément de fermeture (15) comporte un sommet qui vient en prise avec ladite extrémité en crochet de la partie courbe (5), et **en ce que** l'élément de fermeture (15) diminue généralement de largeur, en allant de sa partie d'articulation vers le sommet.

5. Mousqueton selon la revendication 4, **caractérisé en ce que** l'élément de fermeture (15) est constitué par un fil d'acier substantiellement en forme de V ou de U, dont les bras présentent des saillies transversales respectives correspondant à la partie d'articulation qui s'engagent dans des trous correspondants (17) ménagés dans des appendices (13) qui s'étendent à partir des extrémités libres desdits bras divergents (9).

6. Mousqueton selon la revendication 5, **caractérisé en ce que** lesdits trous (17) situés sur des bras différents de la partie fourchue (7) ont des axes parallèles mais décalés.

7. Mousqueton selon une quelconque des revendications 2 à 6, **caractérisé en ce que** ledit mousqueton comprend un axe transversal (2) approprié pour une liaison avec un élément de support allongé (6), tel qu'une corde ou un élément de boucle entourant l'axe, ledit axe (2) étant monté dans une paire de sièges circulaires correspondants formés chacun dans un bras respectif (9) près de son extrémité libre à l'opposé de la partie courbe (5), et ledit axe (2) étant placé dans des plans approximativement parallèles à ladite partie courbe (5).

8. Mousqueton selon la revendication 7, **caractérisé en ce que** l'axe (2) est disposé d'une manière telle que ledit élément de support allongé (6) qui entoure ledit axe (2) est dégagé de ladite base de support afin d'éviter une éraflure de l'élément de retenue (6) par une surface sur laquelle le mousqueton (1) repose sur ladite base.

9. Mousqueton selon la revendication 7 ou 8, **caractérisé en ce que** ledit axe (2) est un élément approximativement cylindrique qui est fabriqué de façon similaire au corps (3) en alliage léger d'aluminium à haute résistance, en particulier en Ergal® ou Avional®, ou en acier à haute résistance, et **en ce qu'**il peut être bloqué dans les sièges par des filetages ou des éléments de fixation.

10. Mousqueton selon les revendications 7 à 9, **caractérisé en ce que** l'axe (2) est fabriqué par roulage ou tournage d'une barre semi-finie, par exemple une barre étirée.
